# EUROPEAN PATENT SPECIFICATION

(11) **EP 3 083 298 B1**
(45) Date of publication and mention of the grant of the patent: **20.03.2019**
(21) Application number: 14827577.9
(22) Date of filing: 10.12.2014
(51) Int. Cl.: B60H 1/34, F24F 13/08

(54) **AN AIR BLOWER**
LÜFTERGEHÄUSE
SOUFFLANTE D'AIR

(30) Priority: 20.12.2013 TR 201315036
(43) Date of publication of application: 26.10.2016
(73) Proprietor: Tofas Turk Otomobil Fabrikasi Anonim Sirketi, Bursa (TR)
(72) Inventor: AYARTURK, Hasan, Bursa (TR)
(74) Representative: Dericioglu Kurt, Ekin
(86) International application number: PCT/TR2014/000495
(87) International publication number: WO 2015/094138

(56) References cited:
- EP-A1- 2 107 321
- EP-A2- 1 953 479
- WO-A2-2004/029427
- DE-A1-102007 001 986
- DE-A1-102009 039 466
- JP-A- 2013 220 138

## Description

### Field of the Invention

The present invention relates to an air blower which is used for air conditioning and demisting purposes in vehicles.

### Background of the Invention

The term air conditioning usually refers to the processes of cooling and dehumidifying - often by cooling - the indoor air for thermal comfort. In a broader sense, the term HVAC can also be used for heating, cooling, ventilation or for disinfection processes to improve the state of the air. Air conditioning systems are used also in vehicles like at homes. Depending on the distance between the air conditioning fan and the air blower, and the sectional geometry of the air channels in vehicles; sufficient air flow and speed cannot be provided at the air blowers. Particularly the air discharge speed of the air blowers at different distances from the vehicle fan can be different. The air conditioner fan may disturb the comfort level as it is a source of noise in the cab. The forced air current in the air channels causes noise. Vehicle blowers do not possess the feature of heating and cooling.

The Korean patent document no. KR20130048489, known in the state of the art, discloses a vehicle air conditioner which is used for both heating and cooling purposes and wherein air flow rate is kept fixed. The system comprises a temperature control unit and an air flow rate control unit.

The Great Britain patent document GB1298359, known in the state of the art, discloses a transverse-flow fan system which is used in motor vehicles and which provides heating and cooling. The said system comprises an impeller and a vortex control member. Additionally noise is prevented by means of sound absorbing material. By means of the moveable part in the system, pressure adjustment can be made by providing air passage/return between the suction and discharge parts of the impeller.

The European patent document EP2107321, known in the state of the art, discloses a method which involves blocking an expulsion orifice at an end of a Hilsch-Ranque vortex tube by a tapered relief valve, so that a fraction of injected compressed air forming an incoming hot air stream is expelled outside a chamber while another fraction of the air stream is reflected towards another end of the tube.

### Summary of the Invention

An objective of the present invention is to provide an air blower, which enables the air discharge speed at all blowers to be the same, and whose air flow rate and speed do not change thanks to the blower design even if the intake air pressure drops.

Another objective of the present invention is to provide an air blower which is disposed in the engine compartment and thus wherein in-cab noise source is eliminated.

Another objective of the present invention is to provide an air blower wherein air channel noise is eliminated as sucked air flow is provided instead of forced air flow in the air channels.

A further objective of the present invention is to provide an air blower, wherein heating and cooling can be carried out, and thus by which the whole air conditioning system can be eliminated and the whole air conditioning system can be operated only by a pressurized air generator, control system and air hose.

### Detailed Description of the Invention

The air blowers developed to fulfill the objective of the present invention is illustrated in the accompanying figure, in which:

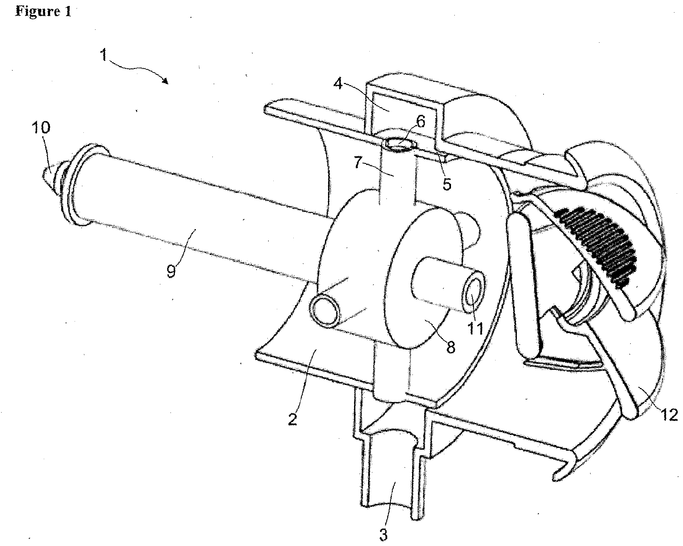

**Figure 1** is a sectional view of the air blower.

The components shown in the figures are each given reference numbers as follows:
1. Air blower
**2.** Main body
**3.** Air intake pipe
**4.** Air chamber
**5.** Wall accelerator
**6.** Air inlet
**7.** Vortex connection
**8.** Vortex generator
**9.** Vortex tube
**10.** Warm air nozzle
**11.** Cold air nozzle
**12.** Air guide

The air blower (1), which is used for air conditioning and demisting purposes in vehicles, basically comprises
- at least one main body (2),
- at least one air intake pipe (3) which is adapted to enable air intake into the main body (2),
- at least one air chamber (4) through which the air entering via the air intake pipe (3) travels,
- at least one wall accelerator (5) having a structure with thin section allowing air to pass,
- at least one air inlet (6) which is provided for the air to travel from the air chamber (4) into the main body (2),
- at least one vortex connection (7) which is provided for the air entering through the air inlet (6) to travel to the center of the main body (2),
- at least one vortex generator (8) which is adapted to reduce temperature of the air at the center of the main body (2),
- at least one vortex tube (9) which is located at one end of the vortex generator (8) and which is adapted for the warm air to be discharged,
- at least one warm air nozzle (10) located at the end of the vortex tube (9),
- at least one cold air nozzle (11) which is located at the end of the vortex generator (8) where the vortex tube (9) is not located,
- at least one air guide (12) which is formed to move the air transmitted through the main body (2) towards the preferred direction.

In one embodiment of the invention, the air blower (1) comprises a main body (2), an air intake pipe (3) provided on the main body (2), an air chamber (4), a wall accelerator (5), one or more air inlet(s) (6), a vortex connection (7), a vortex generator (8) with sound absorber, a vortex tube (9), an adjustable warm air nozzle (10) to the end of which preferably a hose is connected to discharge the exhaust air, and additionally a cold air nozzle (11). If preferred, any air guide (12) in the state of the art can be used. If preferred, only an air blower (1) or an air blower to which any state of the art air guide (12) is adapted can be used. In this case, if the conditioned air will be sucked and blown into the cab, an air channel connection can be made to the rear part of the main body (2).

The pressurized air taken from the air intake pipe (3) is collected in the air chamber (4). The high speed air which passes through the wall accelerator (5) preferably having thin section, through which the air can pass, sucks the air at the rear part of the main body (2) and drags it towards inside of the cab according to the coanda curves (the phenomena in which a jet air flow attaches itself to a nearby surface instead of following a straight path and proceeds following the curves of the surface) principle. If the air pressure is not at a value allowing it to pass through the pressure adjusted vortex connection (7), the air blower (1) is used only for ventilation purposes. The air blower (1) sucks air approximately fifteen times greater than the supply air from the rear part of the main body (2) and blows it into the cab. If the pressurized supply air is heated by the vehicle waste heats, then the mixture of warm air and ambient temperature air output from the air blower (1) is heated. This way heating can be performed. The vortex generator (8) is supplied by the pressurized air chamber. The pressurized air passes through the air inlet (6) and through the pressure adjusted vortex connection (7) if intake pressure is suitable, and then enters the vortex generator (8). The temperature of the air is decreased in the vortex generator (8) and then blown from the cold air nozzle (11) into the cab. The air injected at high speed makes a venturi effect and also causes air to be sucked from the rear part of the main body (2) and to be mixed with cold air and sucked into the cab. This way, cooling is performed in the air blower (1). The warm air leaving the warm air nozzle (10) of the vortex tube (9) is discharged from the cab via a hose connection.

When the air pressure is raised above a certain value, the vortex generator (8) changes character with its pressure sensitive passage gate (pressure valve) and double turbulator effect at two different ends; and warm air flow is enabled from the cold air nozzle (11) and cold air flow is enabled from the warm air nozzle (10). This way, heating is performed in the air blower (1). If this feature is used until heating the vehicle engine, the cab will be heated when the vehicle engine is cold; and when the vehicle engine is heated, energy is saved by heating the supply air by means of the vehicle waste heats.

If preferred, the air blower (1) can also be used only as an air blower. When it is used only for air blowing purposes, it can also be used with the air guide mechanism in the state of the art.

For supply air; pressurized air received from air compressor driven by the vehicle engine shaft, electrical turbo fan or electrical air compressor or from improved (pressure stabilized, no exhaust gas mixed to the fresh air part, and oil vapor suction feature is cancelled, not including molecules harmful to human health, filtered) vehicle supercharging (turbo - compressor) system can be used. By changing the air pressure via the control system, the change in the speed of the blown air and heating and cooling functions can be managed. If air pressure is increased, air speed and heating - cooling power increase as well. A filter and a dehumidifier can be attached to the rear part of the main body (2) to ensure cleanness and dryness (for demisting purposes) of the air. By the dehumidifying system, only demisting feature can also be used without using the heating - cooling features.

## Claims

1. An air blower (1), which is used for air conditioning and demisting purposes in vehicles, **comprising**
- at least one main body (2),
- at least one air intake pipe (3) which is adapted to enable air intake into the main body (2),
- at least one vortex generator (8) which is adapted to reduce temperature of the air at the center of the main body (2),
- at least one warm air nozzle (10) located at the end of a vortex tube (9),
- at least one cold air nozzle (11) which is located at the end of the vortex generator (8) where the vortex tube (9) is not located.
**characterized by**
- at least one air chamber (4) through which the air entering via the air intake pipe (3) travels,
- at least one wall accelerator (5) having a structure with thin section allowing air to pass,
- at least one air inlet (6) which is provided for the air to travel from the air chamber (4) into the main body (2),
- at least one vortex connection (7) which is provided for the air entering through the air inlet (6) to travel to the center of the main body (2),
- wherein the vortex tube (9) is located at one end of the vortex generator (8) and which is adapted for the warm air to be discharged,

2. An air bower (1) according to Claim 1, **characterized by** the air chamber (4) where the pressurized air taken from the air intake pipe (3) is collected.

3. An air blower (1) according to any one of the preceding claims, **characterized by** the wall accelerator (5) preferably having thin section, through which the air can pass, and which enable the high speed air to suck the air at the rear part of the main body (2) and to drag it towards inside of the cab according to the coanda curves principle.

4. An air blower (1) according to any one of the preceding claims, **characterized by** the vortex generator (8), which is supplied by the pressurized air chamber, and into which the air enters after passing through the air inlet (6) and if intake pressure is suitable, through the pressure adjusted vortex connection (7).

5. An air blower (1) according to any one of the preceding claims, **characterized by** the cold air nozzle (11) which enables to blow the air, whose temperature is decreased in the vortex generator (8), into the cab.

6. An air blower (1) according to any one of the preceding claims, **characterized by** the vortex generator (8) which, when the air pressure is raised above a certain value, changes character with its pressure sensitive passage gate (pressure valve) and double turbulator effect at two different ends; and thus enables formation of warm air flow from the cold air nozzle (11) and cold air flow from the warm air nozzle (10).

7. An air blower (1) according to any one of the preceding claims, **characterized by** at least one air guide (12) which is formed to move the air transmitted through the main body (2) towards the preferred direction.

## Patentansprüche

1. Luftgebläse (1), das für Klimaanlagen und Entnebelungszwecke in Fahrzeugen verwendet wird, **umfassend**
- mindestens einen Hauptkörper (2),
- mindestens ein Lufteinlassrohr (3), das angepasst ist, um den Lufteinlass in den Hauptkörper (2) zu ermöglichen,
- mindestens einen Wirbelgenerator (8), der angepasst ist, um die Temperatur der Luft in der Mitte des Hauptkörpers (2) zu reduzieren,
- mindestens eine Warmluftdüse (10), die am Ende eines Wirbelrohres (9) befindet,
- mindestens eine Kaltluftdüse (11), die sich am Ende des Wirbelgenerators (8) befindet, wo sich das Wirbelrohr (9) nicht befindet.
**gekennzeichnet durch**
- mindestens eine Luftkammer (4), durch die die über das Lufteinlassrohr (3) eintretende Luft strömt,
- mindestens einen Wandbeschleuniger (5) mit einer Struktur mit dünnem Querschnitt, der Luft passieren lässt
- mindestens einen Lufteinlass (6), der vorgesehen ist, damit die Luft aus der Luftkammer (4) in den Hauptkörper (2) strömt,
- mindestens eine Wirbelverbindung (7), die vorgesehen ist, damit die durch den Lufteinlass (6) eintretende Luft zur Mitte des Hauptkörpers (2) strömt,
- wobei das Wirbelrohr (9) an einem Ende des Wirbelgenerators (8) befindet ist und das für das zu entladende warme ah angepasst ist,

2. Luftgebläse (1) nach Anspruch 1, **gekennzeichnet durch** die Luftkammer (4), in der die aus dem Lufteinlassrohr (3) entnommene Druckluft gesammelt wird.

3. Luftgebläse (1) nach einem der vorstehenden Ansprüche, **gekennzeichnet durch** den Wandbeschleuniger (5), der vorzugsweise einen dünnen Abschnitt aufweist, durch den die Luft strömen kann und der es der Hochgeschwindigkeitsluft ermöglicht, die Luft am hinteren Teil des Hauptkörpers (2) anzusaugen und nach dem Prinzip der Coanda-Kurven in Richtung Innenraum der Kabine zu ziehen.

4. Luftgebläse (1) nach einem der vorstehenden Ansprüche, **gekennzeichnet durch** den Wirbelgenerator (8), der von der Druckluftkammer versorgt wird und in den die Luft nach dem Durchströmen des Lufteinlasses (6) und bei geeignetem Ansaugdruck durch den druckgeregelten Wirbelverbindung (7) eintritt.

5. Luftgebläse (1) nach einem der vorstehenden Ansprüche, **gekennzeichnet durch** die Kaltluftdüse (11), die es ermöglicht, die Luft, deren Temperatur im Wirbelgenerator (8) gesenkt wird, in die Kabine zu blasen.

6. Luftgebläse (1) nach einem der vorstehenden Ansprüche, **gekennzeichnet durch** den Wirbelgenerator (8), der, wenn der Luftdruck über einen bestimmten Wert angehoben wird, mit seinem druckempfindlichen Durchgangsschieber (Druckventil) und der doppelten Turbulatorwirkung an zwei verschiedenen Enden seinen Charakter ändert und so die Bildung von Warmluftstrom aus der Kaltluftdüse (11) und Kaltluftstrom aus der Warmluftdüse (10) ermöglicht.

7. Luftgebläse (1) nach einem der vorstehenden Ansprüche, **gekennzeichnet durch** mindestens eine Luftführung (12), die so geformt ist, dass sie die durch den Hauptkörper (2) übertragene Luft in Richtung der Vorzugsrichtung bewegt.

## Revendications

1. Souffleuse d'air (1), qui est utilisée à des fins de climatisation et de désembuage dans des véhicules, **comprenant**
- au moins un corps principal (2),
- au moins un tuyau d'admission d'air (3) qui est adapté pour permettre l'admission d'air dans le corps principal (2),
- au moins un générateur de tourbillons (8) qui est adapté pour réduire la température de l'air au centre du corps principal (2),
- au moins une buse à air chaud (10) située à l'extrémité d'un tube tourbillon (9),
- au moins une buse d'air froid (11) qui est située à l'extrémité du générateur de tourbillons (8) où le tube tourbillon (9) n'est pas situé.
**caractérisée par**
- au moins une chambre à air (4) à travers laquelle circule l'air entrant par le tuyau d'admission d'air (3),
- au moins un accélérateur de paroi (5) ayant une structure à section mince laissant passer l'air,
- au moins une entrée d'air (6) qui est prévue pour que l'air circule de la chambre à air (4) dans le corps principal (2),
- au moins un raccord tourbillon (7) qui est prévu pour que l'air entrant par l'entrée d'air (6) se déplace vers le centre du corps principal (2),
- dans laquelle le tube tourbillon (9) est situé à une extrémité du générateur de tourbillons (8) et qui est adapté pour l'air chaud à évacuer,

2. Souffleuse d'air (1) selon la revendication 1, **caractérisée par** la chambre à air (4) dans laquelle l'air sous pression prélevé dans le tuyau d'admission d'air (3) est recueilli.

3. Souffleuse d'air (1) selon l'une quelconque des revendications précédentes, **caractérisée par** l'accélérateur de paroi (5) ayant de préférence une section mince, à travers laquelle l'air peut passer, et qui permet à l'air à grande vitesse d'aspirer l'air dans la partie arrière du corps principal (2) et de l'entraîner vers l'intérieur de la cabine selon le principe des courbes de coanda.

4. Souffleuse d'air (1) selon l'une quelconque des revendications précédentes, **caractérisée par** le générateur de tourbillons (8), qui est alimenté par la chambre d'air sous pression et dans laquelle l'air entre après avoir traversé l'entrée d'air (6) et, si la pression d'aspiration est appropriée, par le raccord tourbillon (7) réglé en pression.

5. Souffleuse d'air (1) selon l'une quelconque des revendications précédentes, **caractérisée par** la buse d'air froid (11) qui permet de souffler l'air, dont la température est diminuée dans le générateur de tourbillons (8), dans la cabine.

6. Souffleuse d'air (1) selon l'une quelconque des revendications précédentes, **caractérisée par** le générateur de tourbillons (8) qui, lorsque la pression d'air est augmentée au-delà d'une certaine valeur, change de caractère avec sa vanne de passage sensible à la pression (vanne de pression) et son double effet turbulateur à deux extrémités différentes ; et permet ainsi la formation d'un flux d'air chaud à partir de la buse d'air froid (11) et d'un flux d'air froid à partir de la buse d'air chaud (10).

7. Souffleuse d'air (1) selon l'une quelconque des revendications précédentes, **caractérisée par** au moins un guide d'air (12) qui est formé pour déplacer l'air transmis par le corps principal (2) vers la direction préférée.
